# EUROPÄISCHE PATENTSCHRIFT

(11) **EP 1 589 254 B1**
(45) Veröffentlichungstag und Bekanntmachung des Hinweises auf die Patenterteilung: **23.08.2006**
(21) Anmeldenummer: 05006055.7
(22) Anmeldetag: 19.03.2005
(51) Int. Cl.: F16F 9/34, F16F 9/00, F16F 9/50

(54) **Stossdämpfer mit amplitudenabhängiger Dämpfung**
Shock damper with amplitude-dependent damping
Amortisseur de chocs à amortissement variable avec amplitude

(30) Priorität: 20.04.2004 DE 102004018990
(43) Veröffentlichungstag der Anmeldung: 26.10.2005
(73) Patentinhaber: ThyssenKrupp Bilstein Suspension GmbH, 58256 Ennepetal (DE)
(72) Erfinder: Nevoigt, Andreas, Dr., 58135 Hagen (DE); Lang, Steffen, Dipl.-Ing., 58256 Ennepetal (DE)
(74) Vertreter: Adams, Steffen

(56) Entgegenhaltungen:
- AT-B- 219 435
- DE-U1- 29 923 961
- FR-A- 2 425 585
- FR-A- 2 796 689
- US-B1- 6 220 409

## Beschreibung

Die Erfindung betrifft eine Einrichtung zur amplitudenabhängigen Dämpfung von Stößen, insbesondere eines Fahrzeugrades, nach dem Oberbegriff des Anspruchs 1.

Aus der österreichischen Patentschrift Nr. 21.9435 ist ein hydraulischer Einrohr-Schwingungsdämpfer bekannt, bei dem ein mit Dämpfungsflüssigkeit beaufschlagtes Polster aus Schaumgummi, Schaumstoff oder dergleichen für den Ausgleich des Kolbenstangenvolumens vorgesehen ist. Das Schaumstoffpolster ist dabei als Bestandteil des Kolbens des Schwingungsdämpfers ausgebildet. Zwischen dem Polster und den Zylinderräumen oberhalb und unterhalb des Kolbens sind dabei Ventile angeordnet, die beispielsweise als Plattenventile ausgebildet sein können. Diese Ventile dienen ausschließlich dazu, die Flüssigkeitsströmung von einer zur anderen Kolbenseite zu steuern, d.h. sie wirken ausschließlich als Rückschlagventile. Mit einer derartigen Vorrichtung ist eine amplitudenabhängige Dämpfung von Stößen, wie sie bei der vorliegenden Erfindung beabsichtigt ist, nicht möglich.

In der Regel lässt sich die Größe der Dämpfung nur über die Widerstände der Strömungskanäle beeinflussen. Wünschenswert ist dagegen eine kleinere Dämpfkraft bei kleinen Amplituden und entsprechend höhere Dämpfkräfte bei großen Kolbenhüben.

Die EP 1 152 166 A1 zeigt einen Stoßdämpfer für Fahrzeugräder, der mit einem Element zur Beeinflussung kleiner Amplituden eines Fahrzeugrades zusammenwirkt. Zum Beeinflussen kleiner Amplituden dient eine einen separaten Raum teilende Membran oder verschiebliche feste Scheibe, wobei dieser Raum mit dem oberen und/oder dem unteren Dämpfungsraum verbunden ist.

Nachteilig bei dieser Ausbildung treten Druckstöße auf, wenn die Membran oder die feste Scheibe gegen den jeweiligen Boden des separaten Raums anschlägt. Dieses führt zu einem schnellen Verschleiß von Membran oder Scheibe und kann in extremen Fällen nachteilig sogar für den Fahrer spürbar sein.

Der Erfindung liegt die Aufgabe zugrunde, die vorbeschriebenen Nachteile zu beheben und eine Einrichtung zum amplitudenabhängigen Dämpfen von Stößen zu schaffen, die möglichst verschleißfrei ist und ein weiches Ansprechen des Arbeitskolbens ermöglicht.

Diese Aufgabe wird durch die Merkmale des Anspruchs 1 gelöst. Vorteilhafte Aus- und Weiterbildungen sind in den Ansprüchen 2 bis 14 beschrieben.

Durch die erfindungsgemäße Lösung, die darin besteht, dass das Trennelement aus geschäumtem elastischem Material besteht, kommt es nicht mehr zu einem Anschlagen des Trennelements an einen der Böden des zusätzlichen Raums. Der Raum wird vorzugsweise vollständig mit dem geschäumten elastischen Material gefüllt. Dadurch liegt das Material von Anfang an an allen Bereichen des Raumes an. Bei einem durch kleine Amplituden erzeugten einseitigen Überdruck wird das geschäumte Material lediglich einseitig komprimiert, was sich jedoch bei den kleinen Amplituden direkt wieder ausgleicht. Durch die relativ weiche Struktur des geschäumten Materials erfolgt das Anlegen nach erfolgter Dekomprimierung auch sehr weich, wobei sich das geschäumte Material rollend an den zu füllenden Raum anlegt. Weiterhin vorteilhaft kann die gewünschte Dämpfungswirkung durch die Wahl des geschäumten Materials beeinflusst werden, ohne dass die Bauform des das geschäumte Material aufnehmenden Raumes geändert werden muss. Die Anpassung des Materials kann zum einen durch die Wahl von offenporig oder geschlossenporig ausgebildetem Material beeinflusst werden. Zum zweiten kann der eingelegte Schaum in weitem Umfang bezüglich seiner Kompressibilität hinsichtlich der gewünschten Eigenschaften gewählt werden.

Der Erfindungsgegenstand ist anhand eines Ausführungsbeispiels in der Zeichnung dargestellt und wird im Folgenden näher beschrieben. Es zeigen
- Fig. 1: einen Schnitt durch einen Stoßdämpfer im Bereich des Arbeitskolbens, wobei das Ausgleichselement zur Beeinflussung kleiner Amplituden zwischen Arbeitskolben und Ende der Kolbenstange angeordnet ist,
- Fig. 2: einen Schnitt gemäß Fig. 1, bei dem das Ausgleichselement unterhalb des Arbeitskolbens angeordnet ist,
- Fig. 3: einen Schnitt durch einen Stoßdämpfer, bei dem zwei voneinander getrennte Ausgleichselemente in separaten Teilräumen angeordnet sind, und
- Fig. 4: eine gegenüber Fig. 3 abgewandelte Ausführungsform der Erfindung.

In beiden Figuren ist ein Einrohrstoßdämpfer dargestellt. Die Erfindung ist jedoch in gleicher Weise auch für Zweirohrstoßdämpfer geeignet.

Wie in beiden Figuren schematisch dargestellt, weist der Stoßdämpfer ein Dämpfergehäuse 1 auf, welches einenends geschlossen ausgebildet ist und andernends eine Öffnung aufweist, durch die eine Kolbenstange 2, an deren Ende ein Arbeitskolben 3 angebunden ist, oszillierend ein- und austaucht.

Der Arbeitskolben 3 teilt den mit Dämpfungsflüssigkeit gefüllten Raum des Dämpfungsgehäuses in zwei Dämpfungsräume 4, 5.

Der Arbeitskolben 3 weist Durchbrüche 6 auf, welche jeweils einseitig mittels Ventilscheiben 7, 8 abgedeckt sind. Durch diese Konstruktion wirken die Durchbrüche 6 und die Ventilscheiben 7, 8 jeweils einseitig als Rückschlagventil. Bei Bewegung der Kolbenstange 2 in Zugrichtung, also in den Figuren nach oben, wird die Dämpfungsflüssigkeit aus dem oberen Dämpfungsraum 4 verdrängt und durchströmt den zugehörigen Durchbruch 6 unter Anhebung der Ventilscheiben 8 von ihrem Sitz. Bei der Bewegung der Kolbenstange 2 nach unten, also in Druckrichtung, erfolgt eine Durchströmung des zugehörigen Durchbruchs 6 vom unteren Dämpfungsraum 5 in den oberen Dämpfungsraum 4 unter Anheben der Ventilscheiben 7. Zur Abdichtung des Arbeitskolbens 3 gegenüber dem Dämpfergehäuse 1 ist am Arbeitskolben 3 umlaufend eine Dichtung 9 vorgesehen.

Das vorbeschriebene Dämpfungsverfahren erfolgt beim erfindungsgemäßen Dämpfer nur bei großen Bewegungsamplituden der Kolbenstange 2 und damit des Arbeitskolbens 3. Bewegungen mit kleiner Amplitude werden durch ein nachfolgend beschriebenes Element ausgeglichen, ohne dass die Durchbrüche 6 durch den Arbeitskolben 3 durchströmt werden.

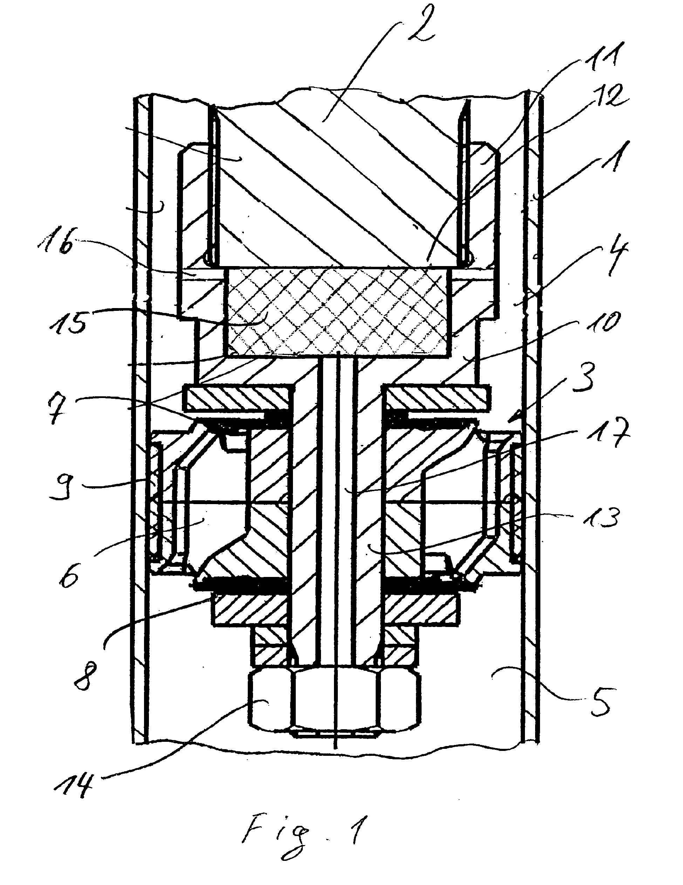

Dieses Element ist gemäß Fig. 1 wie nachfolgend beschrieben aufgebaut. Das Element weist ein Gehäuse 10 auf, welches an seinem oberen Ende in einen Gewindering 11 ausläuft, der am mit einem Gewinde versehenen Ende 12 der Kolbenstange 2 verschraubt wird. Das andere Ende des Gehäuses 10 ist mit einem Zapfen 13 ausgebildet, auf dem der Arbeitskolben 3 mittels einer eine Mutter 14 aufweisenden Schraubverbindung befestigt ist. Andere Befestigungsarten zwischen Gehäuse 10 und Kolbenstange 2, wie beispielsweise Verschweißen, Verlöten oder Verkleben, sind nach fachmännischem Ermessen einsetzbar.

Das Element weist innerhalb seines Gehäuses 10 einen Raum 15 auf, der mit einem geschäumten elastischen Material gefüllt ist. Hydraulische Anbindungen, die jeweils oberhalb bzw. unterhalb des in dem Raum 15 angeordneten Materials enden, verbinden den Raum 15 mit den jeweiligen Dämpfungsräumen 4, 5. Die hydraulischen Verbindungen sind in Fig. 1 Querbohrungen 16 durch das Gehäuse 10 sowie eine zentrale Längsbohrung 17 durch den Zapfen 13.

Bei geringfügigem Differenzdruck zwischen den Dämpfungsräumen 4 und 5 wird das Material im Raum 15 jeweils einseitig komprimiert. Sofern das Material offenporig ist, kann es auch in geringem Maße von der Dämpfungsflüssigkeit durchflossen werden. Da jedoch bei höher werdender Druckdifferenz der Arbeitskolben 3 seine Dämpfungstätigkeit aufnimmt, ist dieses eher theoretischer Art.

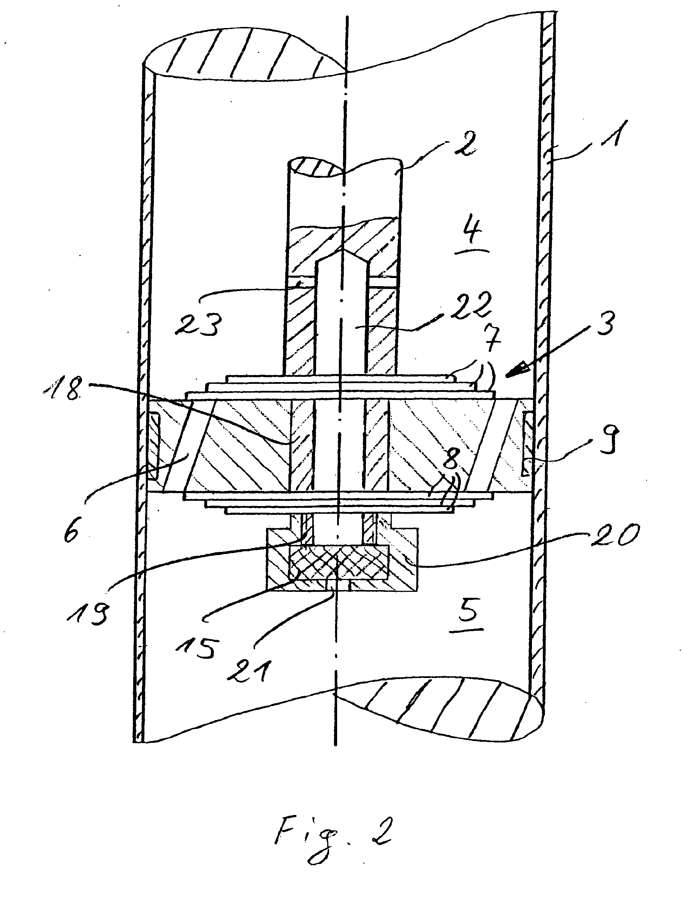

In Fig. 2 ist eine andere Art der Ausbildung des Dämpfungselements zur Beeinflussung kleiner Amplituden dargestellt. Bei dieser Ausbildung ist die Kolbenstange 2 mit einem Zapfen 18 am Ende 12 der Kolbenstange 2 ausgebildet, auf dem der Arbeitskolben 3 befestigt ist. Ein mit einem Außengewinde versehenes Gewindeende 19 überragt den Arbeitskolben 3 nach unten. Das Element ist hier als Befestigungsmutter 20 zur Befestigung des Arbeitskolbens 3 am Ende 12 der Kolbenstange 2 ausgebildet. Die Befestigungsmutter 20 ist mit einem zentralen Raum 15 zur Aufnahme des geschäumten elastischen Materials ausgebildet. Dieser Raum 15 weist als hydraulische Anbindung an den unteren Dämpfungsraum 5 eine Bohrung 21 auf. Die hydraulische Anbindung an den oberen Dämpfungsraum 4 erfolgt durch eine zentrale Bohrung 22 durch die Kolbenstange 2, die über Querbohrungen 23 dann hydraulisch mit dem oberen Dämpfungsraum 4 verbunden ist.

Das in Fig. 2 beschriebene Dämpfungselement wirkt in gleicher Weise wie vorstehend zu Fig. 1 beschrieben.

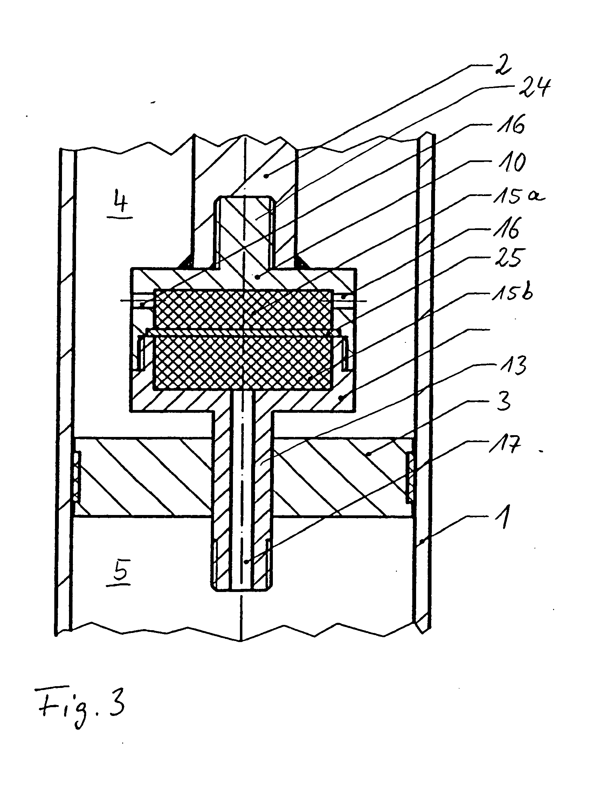

Fig. 3 zeigt eine Ausführungsform der Erfindung, bei der das Gehäuse 10, welches den Raum 15 umschließt, zweiteilig ausgebildet ist. Ein erster Gehäuseteil weist einen Gewindezapfen 24 auf, der mit dem Ende 12 der Kolbenstange 2 verschraubt ist. An dem diesem Gewindezapfen 24 gegenüber liegenden Ende weist das erste Gehäuseteil ein Innengewinde auf, mit dem ein entsprechendes Außengewinde eines zweiten Gehäuseteils verschraubt ist. Das zweite Gehäuseteil weist an seinem unteren Ende einen Zapfen 13 auf, an welchem der Arbeitskolben 3 befestigt ist. Zwischen den Gehäusehälften ist eine feste Trennscheibe 25 angeordnet, die zwischen den Gehäusehälften fest eingeklemmt gehalten ist. Diese Trennscheibe unterteilt den Raum 15 in zwei Teilräume 15a, 15b, wobei jeder Teilraum ein separates Trennelement aufnimmt. Durch diese Anordnung wird erreicht, dass das in Fig. 3 obere Trennelement ausschließlich mit dem Dämpfungsraum 4 zusammenwirkt, während das untere Trennelement nur mit dem Dämpfungsraum 5 zusammenwirkt. Die Trennelemente beider Teilräume stützen sich jeweils auf der festen Trennscheibe 25 ab. Die hydraulische Anbindung des in Fig. 3 dargestellten oberen Teilraums 15a an den Dämpfungsraum 4 erfolgt über die Querbohrungen 16. Der in Fig. 3 dargestellte untere Teilraum 15b ist über eine Längsbohrung 17, die durch den Zapfen 13 verläuft, hydraulisch an den Dämpfungsraum 5 angebunden.

Beim Ausfedern des Stoßdämpfers wird der Druck über die Querbohrungen 16 an das kompressible Element im Teilraum 15a weitergeleitet. Das andere kompressible Element bleibt unbeaufschlagt. In der Umkehrbewegung wird das andere Elastomer im Teilraum 15b durch die Längsbohrung 17 beaufschlagt und das Elastomer im Teilraum 15a bleibt unbeaufschlagt. Bei einer derartigen Anordnung können unterschiedliche Werkstoffe für die separaten Trennelemente eingesetzt werden. Dies ist insbesondere bei Einrohrdämpfern von Vorteil, weil hier z.B. die Anforderungen an das mit der Druckstufe zusammenwirkende Trennelement stark schwanken können, je nachdem, ob der Einrohrdämpfer mit einem Bodenventil ausgestattet ist oder nicht. Generell bietet die separate Anordnung von Trennelementen in den einzelnen Teilräumen 15a, 15b gemäß Fig. 3 die Möglichkeit, die Eigenschaften der Trennelemente an die Anforderungen der jeweiligen Dämpfungsaufgabe anzupassen.

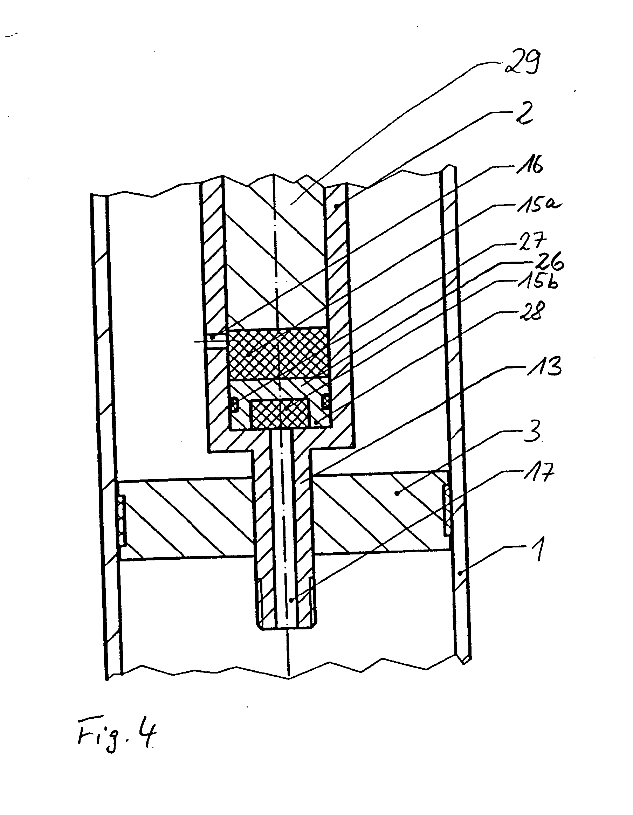

In Fig. 4 ist eine Ausführungsform der Erfindung dargestellt, die der in Fig. 3 dargestellten Ausführungsform ähnlich ist. Im Unterschied zu Fig. 3 ist in Fig. 4 der das Trennelement aufnehmende Raum 15 im Inneren der Kolbenstange angeordnet. Am Ende der Kolbenstange ist ein Zapfen 13 vorgesehen, an welchem der Arbeitskolben 3 befestigt ist.

Als Trennscheibe ist bei der Ausführungsform gemäß Fig. 4 ein topfförmiges Element 26 vorgesehen, d.h. ein Element, welches einen scheibenförmigen Boden aufweist und einen hohlzylindrischen Absatz 28 besitzt. Bei der in Fig. 4 dargestellten Einbausituation ist dieses topfförmige Element 26 in den Innenraum der Kolbenstange 2 eingepresst, sodass dieses Element durch einen Presssitz axial ortsfest in der Kolbenstange gehalten ist. Über einen O-Ring 27, der in einer entsprechenden Nut des topfförmigen Elementes eingesetzt ist, ist eine Abdichtung der Dämpfungsräume 4, 5 gewährleistet.

In die hohle Kolbenstange 2 ist ein Einsatz 29 eingesetzt, der das in dem Teilraum 15a angeordnete Trennelement abstützt. Der Raum 15 wird somit von dem Einsatz 29 sowie der Innenwandung der hohlen Kolbenstange 2 umschlossen. Durch das topfförmige Element 26 wird der Raum 15 wiederum in zwei Teilräume 15a, 15b aufgeteilt. Der in Fig. 4 obere Teilraum 15a nimmt ein erstes Trennelement auf und ist über eine Querbohrung 16 mit dem Dämpfungsraum 4 wirkverbunden. Der in Fig. 4 untere Teilraum 15b ist dagegen über die Längsbohrung 17, die durch den Zapfen 13 verläuft, mit dem Dämpfungsraum 5 wirkverbunden. Das im Teilraum 15b angeordnete Trennelement stützt sich axial gegen das axial ortsfest gehaltene topfförmige Element 26 und die Innenwandung der Kolbenstange 2 ab. Das im Teilraum 15a angeordnete Trennelement stützt sich in axialer Richtung gegen den Einsatz 29 und das axial ortsfest gehaltene topfförmige Element 26 ab.

Für den Fachmann ist es selbstverständlich, dass das topfförmige Element 26 auf verschiedene Art und Weise ortsfest im Inneren der Kolbenstange fixiert werden kann. Die oben genannte Möglichkeit, das topfförmige Element über eine Presspassung in die Kolbenstange einzupressen, ist nur eine Möglichkeit der örtlichen Fixierung dieses Elements. Genauso wäre es möglich, die örtliche Fixierung dieses Elementes z.B. durch Sprengringe oder durch Verkleben zu erreichen.

Die Funktionsweise der in Fig. 4 dargestellten Ausführungsform der Erfindung entspricht der Funktionsweise, wie sie zu Fig. 3 voranstehend beschrieben wurde.

### Bezugszeichenliste

- 1.: Dämpfergehäuse
- 2.: Kolbenstange
- 3.: Arbeitskolben
- 4.: Dämpfungsraum
- 5.: Dämpfungsraum
- 6.: Durchbruch
- 7.: Ventilscheibe
- 8.: Ventilscheibe
- 9.: Dichtung
- 10.: Gehäuse
- 11.: Gewindering
- 12.: Ende
- 13.: Zapfen
- 14.: Mutter
- 15.: Raum
- 15a: Teilraum
- 15b: Teilraum
- 16.: Querbohrung
- 17.: Längsbohrung
- 18.: Zapfen
- 19.: Gewindeende
- 20.: Befestigungsmutter
- 21.: Bohrung
- 22.: Bohrung
- 23.: Querbohrung
- 24.: Gewindezapfen
- 25.: Trennscheibe
- 26.: topfförmiges Element
- 27.: O-Ring
- 28.: Absatz
- 29.: Einsatz

## Patentansprüche

1. Einrichtung zur amplitudenabhängigen Dämpfung von Stößen, insbesondere eines Fahrzeugrades, mit mindestens einem innerhalb eines Dämpfungsgehäuses (1) angeordneten, mit einer Kolbenstange (2) verbundenen, das Dämpfungsgehäuse (1) in zwei Dämpfungsräume (4, 5) aufteilenden Arbeitskolben (3), wobei der Arbeitskolben (3) Durchbrüche (6) für die Durchströmung mit Dämpfungsflüssigkeit aufweist, die jeweils einseitig mittels Ventilscheiben (7, 8) abgedeckt sind, welche die Dämpfungswirkung bei großen Bewegungsamplituden des Arbeitskolbens (3) bestimmen, und wobei der Arbeitskolben (3) mit einem hydraulisch parallel angeordneten Element zur Beeinflussung kleiner Amplituden zusammenwirkt, welches einen mit hydraulischen Anbindungen an die Dämpfungsräume (4, 5) angebundenen Raum (15) mit einem Trennelement aufweist, **dadurch gekennzeichnet, dass** das Trennelement aus geschäumtem elastischem Material besteht.

2. Einrichtung nach Anspruch 1, **dadurch gekennzeichnet, dass** das Trennelement aus geschäumtem Kunststoff oder geschäumtem Gummi besteht.

3. Einrichtung nach Anspruch 1 oder Anspruch 2, **dadurch gekennzeichnet, dass** das Trennelement in nicht oder gering komprimiertem Zustand den Raum (15) wenigstens nahezu vollständig ausfüllt.

4. Einrichtung nach einem oder mehreren der Ansprüche 1 bis 3, **dadurch gekennzeichnet, dass** das Trennelement aus offenporig geschäumtem Material besteht.

5. Einrichtung nach einem oder mehreren der Ansprüche 1 bis 3, **dadurch gekennzeichnet, dass** das Trennelement aus geschlossenporig geschäumtem Material besteht.

6. Einrichtung nach Anspruch 5, **dadurch gekennzeichnet, dass** das geschäumte Material des Trennelements so gewählt ist, dass die Dämpfungsräume (4, 5) voneinander öldicht abgetrennt sind.

7. Einrichtung nach einem oder mehreren der Ansprüche 1 bis 6, **dadurch gekennzeichnet, dass** der Raum (15) innerhalb eines im unteren Dämpfungsraum (5) vorgesehenen Elementes vorgesehen ist.

8. Einrichtung nach Anspruch 7, **dadurch gekennzeichnet, dass** das Element eine mit dem Arbeitskolben (3) zusammenwirkende, Ventilscheiben (7, 8) vorspannende Befestigungsmutter (20) ist.

9. Einrichtung nach einem oder mehreren der Ansprüche 1 bis 6, **dadurch gekennzeichnet, dass** der Raum (15) innerhalb eines im oberen Dämpfungsraum (4) vorgesehenen Elements vorgesehen ist.

10. Einrichtung nach Anspruch 9, **dadurch gekennzeichnet, dass** das Element zwischen dem Ende (12) der Kolbenstange (2) und dem Arbeitskolben (3) angeordnet ist.

11. Einrichtung nach Anspruch 9 oder Anspruch 10, **dadurch gekennzeichnet, dass** das Element an seinem Ende einen Zapfen (13) aufweist, der den Arbeitskolben (3) trägt.

12. Einrichtung nach Anspruch 9, **dadurch gekennzeichnet, dass** der Raum (15) ein Hohlraum in der Kolbenstange (2) ist.

13. Einrichtung nach einem der voranstehenden Ansprüche, **dadurch gekennzeichnet, dass** der Raum (15) durch eine feste Trennscheibe (25) in zwei Teilräume (15a, 15b) getrennt ist, wobei jeder Teilraum (15a, 15b) ein separates Trennelement aufnimmt und wobei einer der Teilräume (15a) mit dem einen Dämpfungsraum (4) und der andere Teilraum (15b) mit dem anderen Dämpfungsraum (5) über hydraulische Anbindungen wirkverbunden ist.

14. Einrichtung nach Anspruch 13, **dadurch gekennzeichnet, dass** die in den beiden Teilräumen (15a,15b) angeordneten Trennelemente aus unterschiedlichen, an die Dämpfungsanforderungen des jeweiligen Dämpfungsraums (4, 5) angepassten Materialien bestehen.

15. Einrichtung nach Anspruch 12, **dadurch gekennzeichnet, dass** der Raum (15) durch ein topfförmiges Element (26), das axial ortsfest in einen Hohlraum der Kolbenstange (2) eingesetzt ist, in zwei Teilräume (15a, 15b) getrennt ist, wobei jeder Teilraum (15a, 15b) ein separates Trennelement aufnimmt und wobei einer der Teilräume (15a) mit dem einen Dämpfungsraum (4) und der andere Teilraum (15b) mit dem anderen Dämpfungsraüm (5) über hydraulische Anbindungen wirkverbunden ist.

## Claims

1. Device for the damping of shocks dependent on amplitude, in particular of a vehicle wheel, having at least one working piston (3) which is disposed inside a damper housing (1), is connected to a piston rod (2) and divides the damper housing (1) into two damping chambers (4, 5), wherein the working piston (3) has openings (6) through which damping fluid flows, which openings are covered in each case on one side by the means of valve discs (7, 8) which determine the damping effect for large amplitudes of movement of the working piston (3), and wherein the working piston (3) cooperates with an element disposed in a hydraulically parallel manner to influence small amplitudes, which element has a chamber (15) with a separating element, which chamber is connected to the damping chambers (4, 5) by hydraulic connections, **characterised in that** the separating element consists of foamed elastic material.

2. Device as claimed in Claim 1, **characterised in that** the separating element consists of foamed plastic or foamed rubber.

3. Device as claimed in Claim 1 or Claim 2, **characterised in that** the separating element which is in a non-compressed or a low-compressed state, almost completely fills the chamber (15).

4. Device as claimed in one or several of Claims 1 to 3, **characterised in that** the separating element consists of foamed material which has open pores.

5. Device as claimed in one or several of Claims I to 3, **characterised in that** the separating element consists of foamed material which has closed pores.

6. Device as claimed in Claim 5, **characterised in that** the foamed material of the separating element is selected so that the damping chambers (4, 5) are separated from one another in a way that is oil-tight.

7. Device as claimed in one or several of Claims 1 to 6, **characterised in that** the chamber (15) is provided within an element provided in the lower damping chamber (5).

8. Device as claimed in Claim 7, **characterised in that** the element is a fastening nut (20) which cooperates with the working piston (3) and prestresses the valve discs (7, 8).

9. Device as claimed in one or several of Claims 1 to 6, **characterised in that** the chamber (15) is provided within an element provided in the upper damping chamber (5).

10. Device as claimed in Claim 9, **characterised in that** the element is disposed between the end (12) of the piston rod (2) and the working piston (3).

11. Device as claimed in Claim 9 or 10, **characterised in that** the element has a pin (13) at its end, which pin (13) supports the working piston (3).

12. Device as claimed in Claim 9, **characterised in that** the chamber (15) is a hollow chamber in the piston rod (2).

13. Device as claimed in one of the preceding Claims, **characterised in that** the chamber (15) is separated into two partial chambers (15a, 15b) by a fixed separating disc (25), wherein each partial chamber (15a, 15b) accommodates a separate separating element and wherein one of the partial chambers (15a, 15b) is operatively connected to one damping chamber (4) and the other partial chamber (15b) is operatively connected to the other damping chamber (5) by means of hydraulic connections.

14. Device as claimed in Claim 13, **characterised in that** the separating elements disposed in both partial chambers (15a, 15b) consist of different materials which are adapted to the damping requirements of the respective damping chamber (4, 5).

15. Device as claimed in Claim 12, **characterised in that** the chamber (15) is separated into two partial chambers (15a, 15b) by a cup-shaped element (26) which is inserted axially in a fixed position into a hollow chamber of the piston rod (2), wherein each partial chamber (15a, 15b) accommodates a separate separating element and wherein one of the partial chamber (15a) is operatively connected to one damping chamber (4) and the other partial chamber (15b) is operatively connected to the other damping chamber (5) by means of hydraulic connections.

## Revendications

1. Dispositif d'amortissement dépendant de l'amplitude, en particulier d'une roue de véhicule, avec au moins un piston de travail (3) agencé à l'intérieur d'un carter d'amortissement (1), relié à une tige de piston (2), divisant le carter d'amortissement (1) en deux chambres d'amortissement (4, 5), dans lequel le piston de travail (3) présente des passages (6) pour la circulation d'un fluide d'amortissement, qui sont chacun masqués d'un côté par des disques de clapets (7, 8) qui déterminent l'amortissement pour de fortes amplitudes de mouvement du piston de travail (3), et dans lequel le piston de travail (3) coopère avec un organe agencé hydrauliquement en parallèle pour une action sur de faibles amplitudes, lequel présente un espace (15) avec un organe de séparation, relié aux chambres d'amortissement (4, 5) par des connexions hydrauliques, **caractérisé en ce que** l'organe de séparation se compose d'une matière élastique en mousse.

2. Dispositif selon la revendication 1, **caractérisé en ce que** l'organe de séparation se compose d'une mousse en matière artificielle ou d'une mousse en caoutchouc.

3. Dispositif selon la revendication 1 ou la revendication 2, **caractérisé en ce que**, à l'état non comprimé ou peu comprimé, l'organe de séparation remplit au moins presque complètement l'espace (15).

4. Dispositif selon une ou plusieurs des revendications 1 à 3, **caractérisé en ce que** l'organe de séparation se compose d'une matière en mousse à cellules ouvertes.

5. Dispositif selon une ou plusieurs des revendications 1 à 3, **caractérisé en ce que** l'organe de séparation se compose d'une matière en mousse à cellules fermées.

6. Dispositif selon la revendication 5, **caractérisé en ce que** la matière en mousse de l'organe de séparation est choisie de telle sorte que les chambres d'amortissement (4, 5) sont séparées l'une de l'autre d'une manière étanche à l'huile.

7. Dispositif selon une ou plusieurs des revendications 1 à 6, **caractérisé en ce que** l'espace (15) est prévu à l'intérieur d'un organe prévu dans la chambre d'amortissement inférieure (5).

8. Dispositif selon la revendication 7, **caractérisé en ce que** l'organe est un écrou de fixation (20) mettant sous pré tension les disques de clapets (7, 8), coopérant avec le piston de travail (3).

9. Dispositif selon une ou plusieurs des revendications 1 à 6, **caractérisé en ce que** l'espace (15) est prévu à l'intérieur d'un organe prévu dans la chambre d'amortissement supérieure (4).

10. Dispositif selon la revendication 9, **caractérisé en ce que** l'organe est disposé entre l'extrémité (12) de la tige de piston (2) et le piston de travail (3).

11. Dispositif selon la revendication 9 ou la revendication 10, **caractérisé en ce que** l'organe présente à son extrémité un appendice (13) qui porte le piston de travail (3).

12. Dispositif selon la revendication 9, **caractérisé en ce que** l'espace (15) est un espace creux dans la tige de piston (2).

13. Dispositif selon l'une des revendications précédentes, **caractérisé en ce que** l'espace (15) est divisé en deux parties (15a, 15b) par un disque de séparation (25) dur, chaque partie (15a, 15b) recevant un organe de séparation distinct et l'une des parties (15a) étant en liaison de travail avec la première chambre d'amortissement (4), et l'autre partie (15b) avec l'autre chambre d'amortissement (5), par l'intermédiaire de connexions hydrauliques.

14. Dispositif selon la revendication 13, **caractérisé en ce que** les organes de séparation disposés dans les deux parties (15a, 15b) de l'espace se composent de matériaux différents, adaptés aux exigences d'amortissement de la chambre d'amortissement (4, 5) correspondante.

15. Dispositif selon la revendication 12, **caractérisé en ce que** l'espace (15) est divisé en deux parties (15a, 15b) par un organe (26) en forme de cuvette, qui est logé de manière fixe en position axiale dans un espace creux de la tige de piston (2), chaque partie (15a, 15b) de l'espace recevant un organe de séparation distinct, et l'une des parties (15a) étant en liaison de travail avec la première chambre d'amortissement (4) et l'autre partie (15b) avec l'autre chambre d'amortissement (5) par l'intermédiaire de connexions hydrauliques.
